Europäisches Patentamt

European Patent Office

Office européen des brevets

(19)

(11) Publication number: **0 092 262**
**B1**

(12) **EUROPEAN PATENT SPECIFICATION**

(45) Date of publication of patent specification: **25.06.86**

(51) Int. Cl.⁴: **B 01 D 3/22, B 01 D 53/18**

(21) Application number: **83200402.2**

(22) Date of filing: **22.03.83**

(54) **Apparatus for contacting a liquid with a gas.**

(30) Priority: **15.04.82 GB 8210980**

(43) Date of publication of application:
**26.10.83 Bulletin 83/43**

(45) Publication of the grant of the patent:
**25.06.86 Bulletin 86/26**

(84) Designated Contracting States:
**BE DE FR GB IT NL SE**

(56) References cited:
**DE-B-1 047 749**
**GB-A-2 002 650**
**US-A-1 776 033**
**US-A-3 589 689**
**US-A-3 985 625**

(73) Proprietor: **SHELL INTERNATIONALE RESEARCH MAATSCHAPPIJ B.V.**
**Carel van Bylandtlaan 30**
**NL-2596 HR Den Haag (NL)**

(72) Inventor: **Bentham, Jeremy Birkett**
**Badhuisweg 3**
**NL-1031 CM Amsterdam (NL)**

(74) Representative: **Aalbers, Onno et al**
**P.O. Box 302**
**NL-2501 CH The Hague (NL)**

Courier Press, Leamington Spa, England.

# Description

The invention relates to a vertical column for contacting a liquid with a gas, having a plurality of horizontal trays arranged one above the other in said column, each of the trays being provided with gas passages and with at least one discharge device for the liquid, the discharge devices being open at their upper ends and extending below the relevant trays, the discharge devices each having a bottom provided with liquid discharge openings, a liquid deflecting structure being arranged below and aligned with each liquid discharge device for distributing the liquid from a liquid discharge opening of said discharge device over the next lower tray.

A column of the above type is known from US patent 3,985,625, in which column the gas passages are formed by conduits extending above the trays and in which the liquid discharge devices consist of spouts in the tray surface. The liquid deflecting structures consist of cups mounted between the gas conduits and the liquid spouts of adjacent trays. The heat and mass transfer in this column occurs in the upper region of the spaces between the trays by transverse flow of liquid and gas. A large drawback of these columns is that the number of gas passages necessarily equals the number of liquid spouts and that the gas does not traverse a stagnant layer of liquid on the tray.

The present invention has as an object to propose a column which does not possess these drawbacks and proposes a column in which the gas passages consist of apertures in the trays, whereas each liquid discharge device also extends above the relevant tray and the liquid deflecting structure is perforated.

It is noted that the present invention proposes a modification of a different type of column than the column according to US patent 3,985,625, i.e. a column in which the trays possess gas apertures in the trays and in which the liquid discharge devices extend also above the tray surface.

Columns of the latter type may be suitably applied for processes like distillation, absorption and stripping. Examples of trays which may be applied in such columns are grid trays which are formed of parallel bars that may be straight or curved and that are spaced apart to leave slots between them, sieve plate trays which are formed of plates that punched or otherwise fabricated to have circular or other openings in them, and valve trays which are sieve trays provided with valves being displaceably arranged in the openings of the trays.

The trays in such columns may be provided with a plurality of discharge devices having any suitable shape. The longitudinal cross-section of the discharge devices is preferably oblong, since such a shape renders it possible to arrange the liquid discharge devices in an optimal manner over a tray to attain during operation a uniform distribution of liquid over a tray and a uniform supply of the liquid to the next lower tray. Especially when such columns are intended for high liquid loads, the liquid discharge devices normally occupy a considerable part of the tray area. The liquid discharge openings in the discharge devices may be arranged in the bottom parts or in the side walls of said devices. When the trays are provided with a plurality of relatively closely packed discharge devices, required for high liquid loads, it is advantageous to arrange the liquid discharge openings in the bottoms of the discharge devices or to provide the discharge devices with open lower ends. In this manner interference of liquid streams from liquid discharge openings of adjacent discharge devices can be obviated even at high liquid loads.

If the liquid discharge openings are arranged in the bottoms of the discharge devices another problem may however arise especially when operating at high liquid loads. The liquid leaving the discharge devices through the openings in the bottoms of the discharge devices may fall with such a velocity onto a next lower tray that the liquid passes directly through the tray openings below the discharge devices when sieve plate trays are applied. If valve trays are applied, the outflowing liquid may push the valves directly below the discharge devices downwards, thereby closing the openings in the relevant tray. The consequence of the above behaviour of the liquid is that the active tray area, i.e. the tray area not occupied by discharge devices can not be fully used for the passage of gas. This means that the gas is not uniformly distributed over the whole available active tray area, as a consequence whereof the space above a tray is not optimally used for the contact between gas and liquid.

An object of the present invention is to provide such a column for contacting a liquid with a gas, provided with trays having active tray areas which can be optimally used for gas/liquid contact, even when the column is operated at high liquid loads, in which column the above problems do not occur.

In a suitable embodiment of the invention the perforated structures are formed of expanded metal, i.e. sheets of metal cut and stretched into lattices. The expanded metal has tangential diamond-shaped openings, arranged in zigzag order. Both the area of the openings, based on the surface area of the sheet metal, and the position of the openings, can be varied in a wide range. An advantage of using expanded metal is that it can be easily bent to the desired shape.

By arranging a perforated structure between a liquid discharge device of a tray and the next lower tray, the liquid stream from a liquid discharge opening in the bottom of said discharge device is broken up and at least partly deflected. The deflection of the liquid stream promotes a uniform distribution of liquid on a tray. By breaking the liquid stream the flow velocity of the liquid and thereby the resulting impact of the liquid on a tray is considerably reduced. As a consequence thereof the upward flow of gas through the apertures in a tray, is less hampered by liquid coming from a discharge device of a next upper tray compared with the hindrance of the passage of gas by downflowing liquid in the absence of a perforated structure arranged between a discharge device of a tray and a next lower tray.

The invention will now be described by way of example only in more detail with reference to the accompanying drawings, in which

Figure 1 is a vertical sectional view of an intermediate part of a gas/liquid contacting column according to the invention;

Figure 2 is a transverse section taken at the line II—II in Figure 1; and

Figure 3 is an enlarged view of detail III in Figure 1.

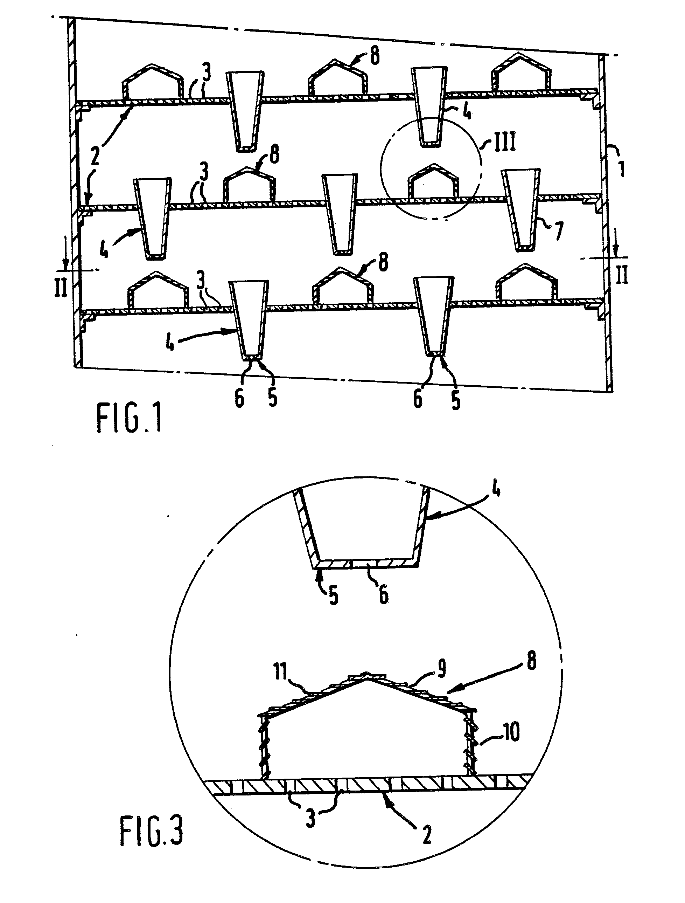

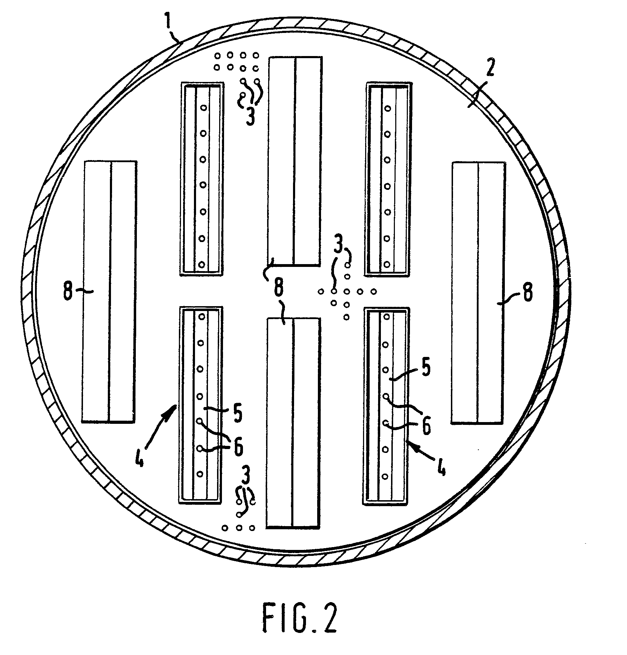

In Figure 1 there is shown an intermediate part of a substantially vertically arranged column 1 of substantially circular cross-section (as shown in Figure 2), which column is provided at its top and bottom with inlets and outlets for liquid and gas, as appropriate (not shown) and, if desired with a liquid distributor, a condenser, a reboiler (also not shown) and/or other associated devices in known manner, for causing gas to ascend and liquid to descend through the column.

The interior of the column 1 is provided with a plurality of substantially horizontal contacting trays 2 (only three of which are shown in Figure 1) arranged one above the other at suitable intervals, e.g. 150 to 750 mm, and extending over substantially the whole cross-section of the column. Each of the trays 2 is provided with a plurality of apertures 3 forming gas flow passages. These apertures 3 are substantially uniformly distributed over the trays and have circular cross-sections in the example shown in the drawings. The apertures 3 are further of substantially uniform size throughout and are spaced apart from each other to provide an aggregate area, that is the free area of the trays, appropriate to the loading conditions at which the column is to be operated. The portions of the trays 2 with the apertures 3 for the passage of gas constitute the active areas of the trays 2, i.e. above these areas liquid and gas introduced into the column are intensively mixed with each other for the exchange of matter and/or heat between said two phases.

Adjoining the active tray areas there is on each tray 2 a plurality of oblong discharge devices 4 for liquid, hereinafter called downcomer ducts, which pass through the tray to a predetermined height above the upper surface of said tray and a predetermined distance below the lower surface of said tray. The downcomer ducts 4 are open at their upper ends, while their lower ends are formed by bottoms 5 provided with a plurality of liquid discharge openings 6. The downcomer ducts 4 are further provided with inclined side walls 7, each pair of side walls 7 being arranged so that the downcomer ducts have a configuration resembling a frustum in cross-section. The liquid discharge openings 6 are distributed over the bottoms 5 of the downcomer ducts 4 so as to discharge liquid substantially uniformly over the length of the downcomer ducts. The aggregate area of the liquid discharge openings 6 in each downcomer duct 4 should be sufficient for discharging all of the liquid flowing downwards through the column interior at the intended liquid loading and should be restricted with respect to the horizontal cross-sectional areas of the lower parts of the downcomer ducts so as to maintain in said downcomer ducts a column of liquid which exerts at the liquid discharge openings 6 a hydrostatic head sufficient to prevent ascending gas from entering these downcomer ducts 4.

The interior of the column partly shown in Figure 1, is further provided with a plurality of perforated structures 8, for distributing liquid from the downcomer ducts 4 over the active tray areas of the next lower trays. The perforated structures 8, mounted on top of the trays, each extend over substantially the full length of a downcomer duct, as is shown in Figure 2. The perforated structures 8 are formed of sheet metal cut and stretched into lattices, also called expanded metal. The expanded metal has tangential diamond-shaped openings 9 for the passage of liquid and gas, the area of said openings 9 being adjusted to the required liquid and gas loads in the column.

Due to the method of producing expanded metal, a sheet of expanded metal is provided with a more open side and a more closed side. The magnitude of the difference between the more open side and the more closed side of a sheet of expanded metal is determined by the size and the number of the openings in the sheet. An increase in the number of openings and/or a decrease of the size thereof causes a more pronounced difference between the more open side and the more closed side of a sheet of expanded metal.

The perforated structures 8 each have two side walls 10 and two top walls 11, the top walls being inclined with respect to the horizontal. The top walls 11, formed of expanded metal, are further so arranged that the more closed sides form the upper sides of the top walls and the more open sides form the lower sides of the top walls. The top of the perforated structure 8 is preferably arranged directly below the centre of the downcomer duct arranged above said structure 8. The inclination of the top walls 11 is determined with the aid of the knowledge of the amounts of liquid and gas which should be passed through the openings in said top walls 11.

With a given configuration of the expanded metal, or in other words a given difference between the more open and the more closed side of the expanded metal, forming the top walls 11, a decrease of the inclination of the top walls 11 with respect to the horizontal causes during operation of the column an increase of liquid from the above arranged downcomer duct passing through the openings in the top walls 11. The perforated structures 8 may be formed of a single sheet of expanded metal bent into the desired configuration, or may be composed of a plurality of sheets secured to each other. The attachment of the perforated structures 8 onto the trays 2 may be accomplished by welding or bolting.

In operation, liquid from the liquid discharge openings 6 of a downcomer duct 4 is prevented from passing directly through the apertures 3 of a tray below said downcomer duct 4, by the upward flow of gas in combination with the presence of a perforated structure 8 between said downcomer duct 4 and said tray 2. When the gas load is decreased below a certain value, the gas pressure drop over the tray becomes insufficient to prevent liquid from passing directly down through the apertures in the relevant tray. This means that if a perforated structure would not be provided between a downcomer duct and a next lower tray, most of the liquid from a downcomer duct would pass through the tray-apertures directly below the downcomer duct, without being intensively mixed with gas. The presence of the perforated structures 8 causes liquid streams from the downcomer ducts 4 to be broken up so that the liquid flows partly through the openings in the perforated structures 8, and partly along the perforated structures 8 outwardly away from the downcomer ducts 4. Further, the flow velocity of the liquid streams is considerably reduced when impinging on the perforated structures 8. As a consequence thereof, the impact of the liquid on the trays is reduced so that the risk of liquid passing through the apertures of the trays 2 is considerably diminished, compared with the situation in which no perforated structures are arranged in the column. The size and total area of the perforations in the perforated structures and/or inclination of the top walls of these structures are suitably so chosen that liquid from a downcomer duct is adequately distributed over the space outside the relevant perforated structure and the space enclosed by the perforated structure and the accompanying tray. In this manner the apertures in the trays can be made equally loaded and equally available for the gas passing through said apertures in upward direction.

By the arrangement of the perforated structures liquid from the downcomer ducts of a tray is intensively mixed with gas on a next lower tray over the whole available area of the active part of said next lower tray. Above each tray an intense foam of liquid and gas is formed, enabling the exchange of matter and/or heat between the liquid phase and the gas phase, wherein the actual result of the liquid/gas contact depends upon the characteristics of the gas and the liquid. The liquid subsequently enters the downcomer ducts of a tray partly by overflow from the relevant tray and partly by falling directly into them from the foam in the space above said tray. The downcomer ducts should be so designed that a column of liquid is formed in each downcomer duct which column provides a hydrostatic head such that the ascending gas is prevented from entering the downcomer duct through its liquid discharge openings.

It should be noted that the invention is not restricted to the shape of downcomer ducts and liquid discharge openings as shown in the Figures. Instead of the shown configurations, the downcomer ducts may for example have a circular or annular cross-section. The liquid discharge openings may be for example formed by slits extending over substantially the full length of the downcomer ducts.

Further, the invention is not restricted to a particular shape of the perforated structures. Although the application of a bent top part as shown in Figure 1 is preferred, it is also possible to apply perforated structures having a flat horizontal top wall. In the example shown in the drawings, the perforated structures are secured to the trays on top thereof. It is also possible to attach the perforated structures to the downcomer ducts. It should be noted that the top walls of the perforated structures so attached should be arranged at some distance below the bottoms of the downcomer ducts, in order to avoid hindrance of liquid outflow by the presence of said structures. Further the inclined flat top walls 11 as shown in Figure 3 may be replaced by a single curved top wall for each downcomer duct.

Although a column provided with sieve trays has been described in the above, perforated structures may also advantageously be applied in columns provided with other types of trays, such as valve trays and grid trays. The presence of perforated structures between downcomer ducts and valve trays prevents the valves directly below the downcomer ducts from being pushed downwards on the trays thereby closing the accompanying openings in the trays for the passage of gas.

Finally it is remarked that the present invention is not restricted to the application of expanded metal for forming the perforated structures. Instead thereof the perforated structures may be for example formed by ribs mounted at an angle onto an open framework. It is also possible to apply perforated plates for forming the perforated structures. In this case the top wall of the structure so formed should preferably be bent or curved to obtain a proper deflection of the liquid streams leaving the downcomer ducts.

**Claims**

1. Vertical column (1) for contacting a liquid with a gas having a plurality of horizontal trays (2) arranged one above the other in the column, each tray (2) being provided with gas passages and at least one liquid discharge device (4) that is open at its upper end, extends below the relevant tray and is provided with a bottom having liquid discharge openings (6), a liquid deflecting structure (8) being arranged below and aligned with each liquid discharge device (4) for distributing the liquid from a liquid discharge opening (6) of said discharge device (4) over the next lower tray, characterized in that the gas passages consist of apertures (3) in the trays (2), each liquid discharge device (4) also extends above the relevant tray and the said liquid deflecting structure (8) is perforated.

2. Column according to claim 1, characterized in that the perforated structures (8) are formed of expanded metal sheets, are each mounted on top of a tray and have parts facing the discharge device which are curved or bent, the expanded metal sheets being so arranged that their more closed side faces upwards and their more open side faces downwards.

## Revendications

1. Colonne verticale (1) destinée à mettre un liquide en contact avec un gaz et possédant une pluralité de plateaux horizontaux (2) disposés l'un au-dessus de l'autre dans la colonne, chaque plateau (2) étant muni de passages de gaz et d'au moins un dispositif d'écoulement du liquide (4) qui est ouvert à son extrémité supérieure, se prolonge au-dessous de son plateau respectif et est muni d'un fond présentant des ouvertures d'écoulement du liquide (6), une structure de déviation du liquide (8) étant agencée au-dessous de chaque dispositif d'écoulement de liquide (4) et alignée sur ce dispositif, pour répartir le liquide sortant d'une ouverture d'écoulement du liquide (6) dudit dispositif d'écoulement (4) sur le plateau immédiatement inférieur, caractérisée en ce que les passages de gaz sont constitués par des ouvertures (3) ménagées dans les plateaux (3), chaque dispositif d'écoulement de liquide (4) se prolonge également au-dessus du plateau considérée et ladite structure de déviation du liquide (8) est perforée.

2. Colonne selon la revendication 1, caractérisée en ce que les structures perforées (8) sont formées de feuilles de métal déployé, sont montées chacune sur la face supérieure d'un plateau et présentent des parties placées face au dispositif d'écoulement qui sont incurvées ou pliées, les feuilles de métal déployé étant agencées de telle manière que leur face la plus fermée regarde vers le haut et que leur face la plus ouverte regarde vers le bas.

## Patentansprüche

1. Senkrechte Kolonne (1) zum Kontaktieren einer Flüssigkeit mit einem Gas mit einer Vielzahl übereinander in der Kolonne angeordneten horizontalen Böden (2), von denen jeder mit Gasdurchlässen und zumindest einer Abflußvorrichtung (4) für die Flüssigkeit, die an ihrem oberen Ende offen ist, sich bis unterhalb des entsprechenden Bodens erstreckt und deren Boden Ablaßöffnungen (6) für die Flüssigkeit aufweist, einer Ablenkstruktur (8) für die Flüssigkeit, die unterhalb und in Reihe mit jeder Ablaßvorrichtung (4) für die Flüssigkeit ausgerichtet ist, zum Verteilen der Flüssigkeit von einer Ablaßöffnung (6) für die Flüssigkeit der Ablaßvorrichtung (4) über den nächst tiefer gelegenen Boden, dadurch gekennzeichnet, daß die Gasdurchlässe Öffnungen (3) in den Böden (2) aufweisen, daß die Ablaßvorrichtung (4) sich auch oberhalb des entsprechenden Bodens erstreckt und daß die Ablenkstruktur (8) für die Flüssigkeit perforiert ist.

2. Kolonne nach Anspruch 1, dadurch gekennzeichnet, daß jede der aus gestreckten Metallplättchen gebildeten perforierten Strukturen (8) auf der Oberseite eines Bodens angebracht und gebogene oder gekrümmte, der Ablaßvorrichtung gegenüberstehende Teile aufweist und daß die gestreckten Metallplättchen so angeordnet sind, daß ihre mehr geschlossenen Seiten aufwärt und ihre mehr geöffneten Seiten abwärts gerichtet sind.

FIG.1

FIG.3

1

FIG. 2